(19) Europäisches Patentamt
European Patent Office
Office européen des brevets

(11) Veröffentlichungsnummer: **0 381 867 A2**

# (12) EUROPÄISCHE PATENTANMELDUNG

(21) Anmeldenummer: **89124168.9**

(22) Anmeldetag: **30.12.89**

(51) Int. Cl.5: **C08G 75/12**

(30) Priorität: **13.01.89 DE 3900916**

(43) Veröffentlichungstag der Anmeldung: **16.08.90 Patentblatt 90/33**

(84) Benannte Vertragsstaaten: **BE DE FR GB IT**

(71) Anmelder: **BAYER AG**
**D-5090 Leverkusen 1 Bayerwerk(DE)**

(72) Erfinder: **Ebert, Wolfgang, Dr.**
**Doerperhofstrasse 31**
**D-4150 Krefeld(DE)**
Erfinder: **Reuter, Knud, Dr.**
**Scheiblerstrasse 99**
**D-4150 Krefeld(DE)**
Erfinder: **Idel, Karsten-Josef, Dr.**
**Am Schwarzkamp 38**
**D-4150 Krefeld-Traar(DE)**
Erfinder: **Kern, Sabine, Dr.**
**Claudiusstrasse 16**
**D-4130 Moers 1(DE)**
Erfinder: **Weymans, Günther, Dr.**
**Karl-Arnold-Strasse 4**
**D-5090 Leverkusen(DE)**

## (54) Polyetheretherketon-Polyarylensulfid-Blockcopolymere.

(57) Die Erfindung betrifft neue Blockcopolyarylensulfide, vorzugsweise Blockcopolyphenylensulfide, hergestellt aus Polyetheretherketonblöcken mit endständigen Halogenatomen und Dihalogenaromaten.

EP 0 381 867 A2

## Polyetheretherketon-Polyarylensulfid-Blockcopolymere

Die Erfindung betrifft neue Blockcopolyarylensulfide, vorzugsweise Blockcopolyphenylensulfide, hergestellt aus Polyetheretherketonblöcken mit endständigen Halogenatomen und Dihalogenaromaten.

Polyarylensulfide (PAS) werden als inerte, hochtemperaturbeständige Thermoplaste, die zudem einen hohen Füllgrad mit Glasfasern und/oder anderen Mineralien erlauben, zunehmend interessant.

Der Einsatz dieser Polymeren, insbesondere des Polyparaphenylensulfids (PPS), nimmt besonders in Bereichen, die bislang Duromeren vorbehalten waren, wegen der einfacheren Verarbeitung zu. Hierzu zählen beispielsweise Bauteile wie Transistoren, Kondensatoren, Mikrochips usw.

Den Anforderungen zur Umhüllung von Chips genügen vorzugsweise leichtfließende PPS-Typen. Sie haben ein verzögertes Kristallisationsverhalten und sind leicht zu verarbeiten.

Für Anwendungen von Polymeren bei hohen Temperaturen sollte eine hohe Wärmeformbeständigkeit (Tg) des Polymeren gegeben sein. Ein Kriechen des Polymeren bei mechanischer Belastung sollte nicht auftreten.

Es wurde nun gefunden, daß aus Dihalogenaromaten wie Dihalogenbenzol, bevorzugt p-Dichlorbenzol und Polyetheretherketonblöcken mit endständigem Halogen hergestellte Blockcopolyarylensulfide, vorzugsweise Blockcopolyphenylensulfide, eine über der für Poly-p-phenylensulfid üblicherweise bei 87° C liegenden erhöhten Glastemperatur (Tg) und eine verzögerte Kristallisation haben.

Gegenstand der Erfindung sind daher Blockcopolyarylensulfide, vorzugsweise Blockcopolyphenylensulfide, hergestellt aus Dihalogenaromaten, vorzugsweise aus

A) 50 - 100 Gew.-%, besonders bevorzugt 80 - 100 Gew.-% Dihalogenaromaten, bezogen auf die Summe aus A) und B), Dihalogenbenzolen der Formel (I)

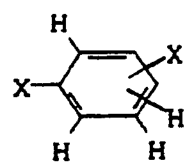

(I),

und

B) 0 bis 50 Gew.-%, bezogen auf die Summe aus A) und B), bevorzugt von 0 - 20 Gew.-% Dihalogenaromaten, vorzugsweise Dihalogenbenzolen der Formel (II)

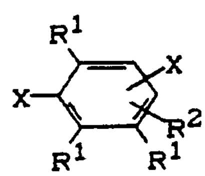

(II),

in denen

X für zueinander meta- und para-ständiges Halogen wie Chlor oder Brom steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatome wie N, O, S enthaltenden Ring verknüpft sein können und immer ein Rest $R^1$ verschieden von Wasserstoff ist,

gegebenenfalls zusätzlich

C) von 0,01 bis 5 Mol-%, bevorzugt 0,05 bis 2,5 Mol-%, bezogen auf die Summe der Dihalogenaromaten (A + B), Tri- und Tetrahalogenaromaten der Formel (IX)

$Ar''X_p$ (IX),

in welcher

$Ar''$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

p für die Zahl 3 oder 4 steht,
und

D) Polyetheretherketonblöcken der Formel (III)

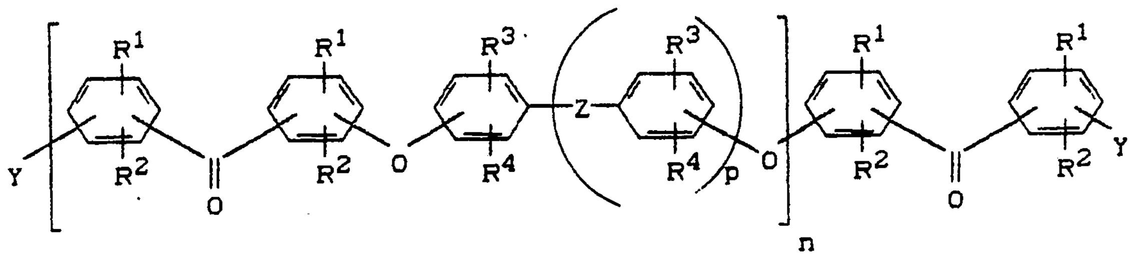

(III),

in der
Y für Halogen wie F, Cl, Br, bevorzugt F, Cl steht,
$R^1$, $R^2$, $R^3$ und $R^4$ unabhängig voneinander die bei Formel (II) für $R^1$, $R^2$ genannte Bedeutung haben und bevorzugt für H oder Methyl stehen und
Z eine chemische Einfachbindung, gegebenenfalls verzweigtes $C_{1-12}$-Alkyliden, gegebenenfalls verzweigtes $C_{5-20}$-Cycloalkyliden, Sauerstoff, Schwefel, SO, $SO_2$, CO bedeutet, wobei $R^1$ die bei Formel (II) angegebene Bedeutung hat,
p für die Zahl 1 oder 0 steht und
n für eine Zahl von 1 bis 100 steht.

Vorzugsweise steht in Formel (III) Z für gegebenenfalls verzweigtes $C_{1-6}$-Alkyliden, gegebenenfalls verzweigtes $C_{5-20}$-Cycloalkyliden wie z.B. ein Rest der Formel (IIIa), -S-, $-SO_2-$

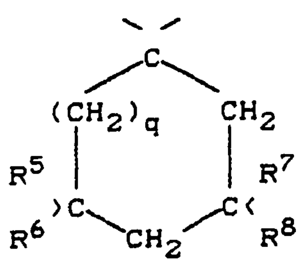

(IIIa),

in welcher
$R^5$, $R^6$, $R^7$, $R^8$ unabhängig voneinander Wasserstoff und $C_1$-$C_4$-Alkyl, bevorzugt Wasserstoff und Methyl bedeuten und
q für die Zahl 0, 1, 2 oder 3, bevorzugt 0 oder 1, steht.

In Formel (III) wird n so gewählt, daß das Molgewicht des Blocks innerhalb der eckigen Klammer etwa 500 bis 10.000, bevorzugt etwa 1.000 bis 6.000, ergibt.

Das erfindungsgemäße Blockcopolymere enthält 1 bis 50 Gew.-%, vorzugsweise 1 bis 30 Gew.-%, Polyetheretherketon-Blöcke der Formel (III) eingebaut.

Gegenstand der Erfindung ist ein Verfahren zur Herstellung der erfindungsgemäßen Polyarylensulfidblockcopolymeren, vorzugsweise Polyphenylensulfidblockcopolymeren, dadurch gekennzeichnet, daß Dihalogenaromaten, vorzugsweise Dihalogenbenzole der Formel (I)

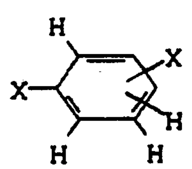

(I),

und
0 bis 50 Gew.-% Dihalogenaromaten, vorzugsweise Dihalogenbenzole der Formel (II)

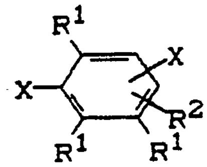

(II),

in denen
X für zueinander meta- und para-ständiges Halogen wie Chlor oder Brom steht und
$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist,
mit 0,5 bis 1,25 Mol Schwefelspendern wie Alkalisulfid, bevorzugt Natrium-oder Kaliumsulfid oder deren Mischung, zusammen mit 0 bis 10 Gew.% Alkalihydroxiden wie Natrium- und Kaliumhydroxid und 0 bis 0,5 Mol Alkalihydrogensulfid, bevorzugt Natrium- und Kaliumhydrogensulfid, oder deren Mischung, wobei das molare Verhältnis von Mol Dihalogenaromat/Mol Alkalisulfid im Bereich von 0,75:1 bis 1,25:1 liegen kann und 0 bis 0,05 Mol, bezogen auf die Summe der Dihalogenaromaten, Tri- und Tetrahalogenaromaten, vorzugsweise Tri- und Tetrahalogenbenzolen der Formel (IV)

$ArX_n$ (IV),

in welcher
Ar ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
X für Halogen wie Chlor oder Brom steht und
n für die Zahl 3 oder 4 steht,
und
Polyetheretherketonblöcke der Formel (III)

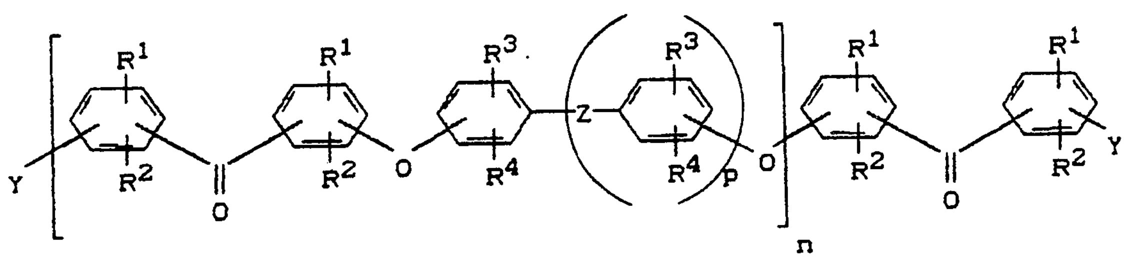

(III),

Y für Halogen wie F, Cl, Br, bevorzugt F, Cl steht,
$R^1$, $R^2$, $R^3$ und $R^4$ unabhängig voneinander die bei Formel (II) für $R^1$, $R^2$ genannte Bedeutung haben und bevorzugt für H oder Methyl stehen und
Z eine chemische Einfachbindung, gegebenenfalls verzweigtes $C_{1-12}$-Alkyliden, gegebenenfalls verzweigtes $C_{5-20}$-Cycloalkyliden, Sauerstoff, Schwefel, SO, $SO_2$, CO bedeutet, wobei $R^1$ die bei Formel (II) angegebene Bedeutung hat,
p für die Zahl 1 oder 0 steht und
n für eine Zahl von 1 bis 100 steht,
gegebenenfalls in Gegenwart von Kettenreglern umgesetzt werden.

Es kommen übliche Kettenregler, z.B. Monohalogenaromaten, Monomercaptoverbindungen bzw. deren Gemische (z.B. DE-A 35 29 500, 35 29 501, 35 23 498) in Frage.

Das Verfahren kann in Gegenwart von Reaktionsbeschleunigern wie Alkalicarboxylaten (z.B. NaOAc, KOAc), Alkaliphosphaten (z.B. $NaH_2PO_2$, $Na_3PO_4$), Alkaliphosphonaten, Alkalifluoriden (z.B. NaF, KF), Alkalialkylsulfonaten durchgeführt werden. Weiterhin können N,N-Dialkylcarbonsäureamide, Lactame, Anhydride und Ester von Carbonsäuren zugegen sein.

Das Verfahren kann in dipolar-aprotischen Solventien wie N-Alkyllactamen durchgeführt werden, gegebenenfalls unter Mitverwendung von Cosolventien. Das molare Verhältnis von Alkalisulfiden zum Lösungsmittel liegt im Bereich von 1:2 bis 1:15.

Die Umsetzung wird bei einer Temperatur von 150 bis 300 °C durchgeführt.

Die Polyetheretherketonblöcke können zusammen mit den Dihalogenaromaten dem Umsetzungsgemisch in Lösung oder in fester Form zugesetzt werden. Vorzugsweise werden sie nach der Entwässerung des Umsetzungsgemisches (z.B. aus Halogenaromaten, Schwefelspender) diesem zugesetzt. In einer besonderen Ausführungsform kann der Polyetheretherketonblock nach der Polykondensationsreaktion der Dihalogenaromaten und des Schwefelspenders zugegeben werden.

Die Polyetheretherketonblöcke sind bekannt oder können analog bekannter Verfahren hergestellt werden (z.B. DE-A 2 220 079, 3 833 386).

Als Bisphenolkomponenten bei der Herstellung der Polyetheretherketonblöcke werden vorzugsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone, $\alpha,\alpha'$-Bis-(hydroxyphenyl)-diisopropylbenzole wie z.B. 4,4'-Dihydroxydiphenyl, 4,4'-Dihydroxy-3,3',5,5'-tetramethyldiphenyl, Bis-(4-hydroxyphenyl)-methan, Bis-(4-hydroxy-3,5-dimethylphenyl)-methan, 1,1-Bis-(4-hydroxyphenyl)-ethan, 1,2-Bis-(4-hydroxyphenyl)-ethan, 1,1-Bis-(4-hydroxy-3,5-dimethylphenyl)-ethan, 1,2-Bis-(4-hydroxy-3,5-dimethylphenyl)-ethan, 2-Phenyl-2,2-bis-(4-hydroxyphenyl)-ethan, 2-Phenyl-2,2-bis-(4-hydroxy-3,5-dimethylphenyl)-ethan, 2,2-Bis-(4-hydroxyphenyl)-propan, 2,2-Bis-(4-hydroxy-3,5-dimethylphenyl)-propan, 1,1-Bis-(4-hydroxy phenyl)-cyclohexan, 1,1-Bis-(4-hydroxy-3,5-dimethylphenyl)-cyclohexan, 3,3,5-Trimethyl-1,1-bis-(4-hydroxyphenyl)-cyclohexan, 3,3,5-Trimethyl-1,1-bis-(4-hydroxy-3,5-dimethylphenyl)-cyclohexan, 3,3,5,5-Tetramethyl-1,1-bis-(4-hydroxyphenyl)-cyclohexan, 3,3,5,5-Tetramethyl-1,1-bis-(4-hydroxy-3,5-dimethylphenyl)-cyclohexan, 3,3-Dimethyl-5-methyl-1,1-bis-(4-hydroxy-phenyl)-cyclopentan, 3,3-Dimethyl-5-methyl-1,1-bis-(4-hydroxy-3,5-dimethylphenyl)-cyclopentan, Bis-(4-hydroxyphenyl)-sulfon, Bis-(4-hydroxy-3,5-dimethylphenyl)-sulfon, Bis-(4-hydroxyphenyl)-sulfid, Bis-(4-hydroxy-3,5-dimethylphenyl)-sulfid, Bis-(4-hydroxyphenyl)-ether, Bis-(4-hydroxy-3,5-dimethylphenyl)-ether, Bis-(4-hydroxyphenyl)-keton, Bis-(4-hydroxy-3,5-dimethylphenyl)-keton usw. eingesetzt.

Besonders bevorzugte Polyetheretherketonblöcke werden durch Umsetzung von 4,4'-Difluorbenzophenon, 4,4'-Dichlorbenzophenon mit Bis-(4-hydroxyphenyl)-sulfid, Bis-(4-hydroxyphenyl)-sulfon, 1,1-Bis-(4-hydroxyphenyl)-cyclohexan, Bis-(4-hydroxy-3,5-dimethylphenyl)-sulfid, Bis-(4-hydroxy-3,5-dimethylphenyl)-sulfon, 1,1-Bis-(4-hydroxy-3,5-dimethylphenyl)-cyclohexan, 3,3,5-Trimethyl-1,1-bis-(4-hydroxy-3,5-dimethylphenyl)-cyclohexan, 3,3,5,5-Tetramethyl-1,1-bis-(4-hydroxyphenyl)-cyclohexan, 3,3,5,5-Tetramethyl-1,1-bis-(4-hydroxy-3,5-dimethylphenyl)-cyclohexan, 3,3,5-Trimethyl-1,1-bis-(4-hydroxyphenyl)-cyclohexan, 3,3,5-Trimethyl-1,1-bis-(4-hydroxy-3,5-dimethylphenyl)-cyclopentan und/ oder 3,3,5-Trimethyl-1,1-bis-(4-hydroxyphenyl)-cyclopentan hergestellt.

Die Herstellung der PEEK-PAS-Blockcopolymeren kann analog der Herstellung von Polyarylensulfiden erfolgen, z.B. analog EP-A 126 369, DE-A 3 703 350, EP-A 109 637, EP-A 142 024, EP-A 171 021, US-A 3 354 129 usw.

Die Alkalisulfide, z.B. $Na_2S$, $K_2S$, als Schwefelspender, werden vorzugsweise in Form ihrer Hydrate und wäßrigen Mischungen oder wäßrigen Lösungen eingesetzt. Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und dann die Entwässerung des Gesamtgemisches durchgeführt werden. Das Alkalisulfid kann auch separat mit einem Teil der Reaktionskomponenten oder alleine entwässert werden.

In einer Ausführungsform der Reaktion werden die Reaktionspartner zusammen mit dem Reaktionsbeschleuniger bzw. einem Gemisch von Reaktionsbeschleunigern in Anwesenheit des polaren Lösungsmittels kontinuierlich unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden. Sie kann von 1 bis 48 Stunden, bevorzugt 1 bis 18 Stunden, betragen. Die Reaktionstemperaturen liegen zwischen 150 und 300 °C, vorzugsweise zwischen 170 und 280 °C.

Die Zugabe des Polyetheretherketonblockes (PEEK) kann in verschiedener Art und Weise erfolgen. So kann z.B. der PEEK-Block vorgelegt werden oder während der Entwässerung in Lösung zugesetzt werden oder vorzugsweise nach der Entwässerung in Lösung, in dem bei der Reaktion verwendeten Lösungsmittel zugesetzt werden. Es können Gemische aus verschiedenen PEEK-Blöcken verwendet werden.

Die Aufarbeitung des Umsetzungsgemisches und die Isolierung der Blockcopolyarylensulfide können in bekannter Weise erfolgen.

Das Blockcopolyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Blockcopolyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Blockcopolyarylensulfid kann auch beispielsweise durch Abdestillieren des Lösungsmittels und eine anschließende Wäsche, wie oben beschrieben, gewonnen werden.

Die Alkalisulfide als Schwefelspender können z.B. auch aus $H_2S$ und den Alkalihydroxiden erhalten werden.

Je nach Anteil an Alkalihydrogensulfid (z.B. NaHS, KHS), das als Verunreinigung im Alkalisulfid in der Reaktionslösung enthalten sein kann, können zusätzlich bestimmte Anteile Alkalihydroxid (z.B. NaOH, KOH) zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können als Dihalogenaromaten Dihalogenbenzole, aber auch Dihalogenaromaten wie 4,4′-Dichlordiphenyl, 4,4′-Dichlordiphenylsulfon, 4,4′-Difluordiphenylsulfon, 4,4′-Difluorbenzophenon, 4,4′-Dichlorbenzophenon etc. eingesetzt werden. Bevorzugt werden Dihalogenbenzole der Formeln (I) und (II) eingesetzt. In diesem Fall kann das Verhältnis meta- zu para-Dihalogenaromaten bis zu 30:70 betragen.

Vorzugsweise werden p-Dihalogenaromaten wie p-Dichlorbenzol, p-Dibrombenzol eingesetzt.

Sollen verzweigte Polyarylensulfid/PEEK-Blockcopolymere hergestellt werden, sollten mindestens 0,0005 Mol, bezogen auf 1 Mol (I) + (II), eines Tri- oder Tetrahalogenaromaten der Formel (IV) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlor naphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2′,4,4′-Tetrachlorbiphenyl, 2,4,6-Trichlor-1,3,5-triazin. 1,3,5-Tris(4-chlorphenyl)benzol u.s.w.

Generell kann jedes polare Lösungsmittel für die Reaktion eingesetzt werden, das eine ausreichende Löslichkeit der organischen und gegebenenfalls anorganischen Reaktanden unter den Reaktionsbedingungen gewährleistet. Bevorzugt werden N-Alkyllactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-2,4,5-trimethyl-2-pyrrolidon, N-Methyl-2-piperidon, N-Ethyl-2-piperidon, N-Isobutyl-2-piperidon, N-Methyl-6-methyl-2-piperidon, N-methyl-3-ethyl-2-piperidon.

Es können Mischungen der vorstehenden Lösungsmittel gewählt werden.

Als Kettenabbrecher verwendbare Monohalogen- oder Monomercaptoverbindungen sind z.B.:

3-Chlordiphenyl, 3-Bromdiphenyl, 4-Chlordiphenyl, 4-Bromdiphenyl, 3-Chlordiphenylsulfid, 3-Bromdiphenylsulfid, 4-Chlordiphenylsulfid, 4-Bromdiphenylsulfid, 3-Chlordiphenylsulfon, 3-Bromdiphenylsulfon, 4-Chlordiphenylsulfon, 4-Bromdiphenylsulfon, 3-Chlordiphenylketon, (3-Bromphenyl)phenylketon, (4-Chlorphenyl)-phenylketon, (4-Bromphenyl)phenylketon, Mercaptane wie Butylmercaptan, Dodecylmercaptan, Stearylmercaptan, Benzylmercaptan, Thiophenol, 1-Mercaptonaphthalin, 2-Mercaptonaphthalin, 4-Mercaptodiphenyl, 4-Mercaptodiphenylether, 4-Mercaptodiphenylsulfon, 4-Mercaptodiphenylsulfid, 4-Mercaptodiphenylketon, 2-Mercaptobenzooxazol, 2-Mercaptobenzthiazol, 2-Mercaptobenzimidazol sowie deren Alkalisalze (z.B. Li-, Na-, K-, $NH_4$-mercaptide), Erdalkalisalze (z.B. Ca-, Mg- oder Zn-Mercaptide).

Weitere Verbindungen, die als Kettenabbrecher geeignet sind, sind z.B. Phenole, wie in EP-A 229 626 beschrieben.

Die Reaktion kann gegebenenfalls zusätzlich in Anwesenheit von üblichen Reaktionsbeschleunigern wie z.B. Alkalicarboxylaten (DE-A 2 453 749), Lithiumhalogeniden oder Alkalicarboxylaten (DE-A 2 623 362), Lithiumchlorid oder Lithiumcarboxylat (DE-A 2 623 363), Alkalicarbonaten in Kombination mit Alkalicarboxylaten (US-A 4 038 259), Lithiumacetat (DE-A 2 623 333), Trialkaliphosphaten (DE-A 2 930 710), Trialkaliphosphonaten (DE-A 2 930 797), Alkalifluoriden (DE-A 3 019 732), Alkalisulfonaten (US-A 4 038 260), Lithiumcarbonat und Lithiumborat (US-A 4 030 518), Aminosäuren, definierten Mengen Lactamen, Anhydriden und Estern von Carbonsäuren (z.B. EP-A 171 021) und N,N-Dialkylcarbonsäureamiden durchgeführt werden.

Die neuen Polyarylensulfidblockcopolymeren zeichnen sich durch höhere Glastemperaturen und später einsetzende Kristallisation der Schmelzen aus.

Die erfindungsgemäßen Polyarylensulfid-Blockcopolymeren können mit anderen Polymeren, vorzugsweise PPS und PEEK abgemischt werden. Übliche Zusatzstoffe wie Pigmente und Füllstoffe - beispielsweise Graphit, Metallpulver, Metalloxide, Glaspulver, Quarzmehl, Talkum, Glasfasern oder Kohlefasern, für Polyarylensulfide übliche Additive, beispielsweise übliche Stabilisatoren oder Entformungsmittel, können zugemischt werden.

Im allgemeinen wird das Schmelzfließverhalten von Polyarylensulfiden nach ASTM 1238-70 bei 316 °C unter Verwendung eines 5-kg-Gewichtes gemessen und in g/10 min angegeben. Dieses Verfahren wurde ebenfalls zur Bestimmung des Schmelzfließverhaltens der neuen Polyarylensulfid-Polyetheretherketon-Blockcopolymeren herangezogen.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta m$ der Polymerschmelze (in Pa.s) bei 306 °C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron, Durchmesser des Kegels und der Platte 2 cm. Angegeben wird die Schmelzviskosität, die bei einer Schubspannung von $\tau = 10^2$ Pa gemessen wird.

Die erfindungsgemäßen Polyarylensulfide besitzen nach der Isolierung aus dem Reaktionsgemisch Schmelzviskositäten zwischen 1 bis 5 x $10^3$, vorzugsweise 5 bis 1 x $10^3$ Pa.s. Sie können in der üblichen Weise verarbeitet werden, z.B. zu Folien, Fasern und als Spritzgußmassen verwendet werden. Diese können Verwendung finden z.B. als Automobilteile, Armaturen, Elektroteile, (z.B. Schalter), elektronische Tafeln, Leiterplatten, chemikalienresistente und witterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc.

Polyarylensulfide können über chromatographische Verfahren analysiert werden, um Aussagen über Molekulargewicht und Molekulargewichtsverteilung zu machen.

Hierfür sind z.B. Hochdruckflüssigkeitschromatographie (HPLC) oder Gelpermeationschromatographie (GPC) geeignet.

## Beispiele

### Allgemeine Arbeitsvorschrift

Als Apparate- und Kesselmaterial kommen vorzugsweise unter den Umsetzungsbedingungen inerte Materialien in Betracht, z.B. Edelstahlkessel, Titan-, Zirkonkessel oder mit diesen Materialien beschichtete

Kessel, gegebenenfalls können auch Gefäße aus Edelmetallen oder mit inerten Polymeren beschichtete Apparate und Kessel verwendet werden. Möglich sind ebenso Quarz- und Glasapparaturen, die unter den Reaktionsbedingungen stabil sind.

Man legt 489,2 g (3,33 Mol) p-Dichlorbenzol und 2,15 l N-Methylcaprolactam in einem 5 l-Kessel vor, erhitzt auf 215 ° C und tropft ein Gemisch aus 919,5 g (7,16 Mol) Natriumsulfidtrihydrat, 260 g Wasser, 3,5 g (0,0875 Mol) Natriumhydroxid und 112,9 g (0,88 Mol) ε-Caprolactam so zu, daß die Sumpftemperatur bei 215 ° C bleibt. Dabei destilliert das zugesetzte Wasser und das Hydratwasser ab. Während der Natriumsulfidzugabe werden 489,2 g (3,33 Mol) p-Dichlorbenzol zugetropft. Die Zugabedauer beträgt 4 h. Nach 2 h Nachrührzeit wird der PEEK-Block, gelöst in 400 ml N-Methylcaprolactam, zugesetzt. Anschließend wird noch 7 h auf 240 ° C erhitzt und der Inhalt des 5 l-Kessels in 40 l Isopropanol abgelassen. Nach Ansäuern auf pH 1 filtriert man das ausgefallene Polymer ab und wäscht mit destilliertem Wasser elektrolytfrei. Das Polymer wird im Vakuum 24 h bei 110 ° C getrocknet.

Als charakteristische physikalische Eigenschaften wurden die Glastemperatur Tg, die Rekristallisationstemperatur bei Wiederabkühlen $T_k$ und die Schmelzenthalpie $\Delta H_k$ durch DSC-Messungen bestimmt.

Beispiel 1

Zugesetzt werden 80 g eines PEEK-Blocks, hergestellt aus 4,4′-Difluorbenzophenon und 3,3′,5,5′-Tetramethylbisphenol A.
Fluorgehalt: 2 %;
Ausbeute: 688,7 g: $\eta_{melt}$: 140 Pa.s; Tg: 99,8 ° C: $T_k$: 216,4 ° C; $\Delta H_k$: 38,1 J/g

Beispiel 2

Wie in Beispiel 1, jedoch 160 g des PEEK-Blocks (F = 2 %)
Ausbeute: 798,7 g; $\eta_{melt}$: 55 Pa.s; Tg: 104,6 ° C; $T_k$: 226,0 ° C; $\Delta H_k$: 36,3 J/g

Beispiel 3

Zugesetzt werden 47,5 g eines PEEK-Blocks, hergestellt aus 4,4′-Difluorbenzophenon und 3,3,5-Trimethyl-1,1-bis-(4-hydroxyphenyl)-cyclohexan.
Fluorgehalt: 1,3 %;
Ausbeute: 679 g; $\eta_{melt}$: 27 Pa.s; Tg: 93,2 ° C; $T_k$: 234,1 ° C; $\Delta H_k$: 44,4 J/g

Beispiel 4

Wie Beispiel 3, jedoch werden 95 g des PEEK-Blocks zugesetzt.
Fluorgehalt: 1,3 %
Ausbeute: 725 g; $\eta_{melt}$: 32 Pa.s; Tg: 96 ° C; $T_k$: 232,3 ° C; $\Delta H_k$: 44,4 J/g

Beispiel 5

Zugesetzt werden 80 g eines PEEK-Blocks, hergestellt aus 4,4′-Difluorbenzophenon und 1,1-Bis-(4-hydroxyphenyl)-cyclohexan.
Fluorgehalt: 1,6 %;
Ausbeute: 705 g; $\eta_{melt}$: 11 Pa.s; Tg: 88,7 ° C; $T_k$: 237,6 ° C; $\Delta H_k$: 52,4 J/g

Beispiel 6

Zugesetzt werden 80 g eines PEEK-Blocks wie in Beispiel 5, jedoch Fluorgehalt 0,84 %.
Ausbeute: 693 g; $\eta_{melt}$: 18 Pa.s; Tg: 92 ° C; $T_k$: 216,6 ° C; $\Delta H_k$: 46,5 J/g

Beispiel 7

Zugesetzt werden 80 g eines PEEK-Blocks, hergestellt aus 4,4'-Difluorbenzophenon und Hydrochinon, Fluorgehalt: 2,5 %.
Ausbeute: 709 g; $\eta_{melt}$: 57 Pa.s; Tg: 95,3 °C; $T_k$: 236,1 °C; $\Delta H_k$: 44,4 J/g

## Ansprüche

1) Blockcopolyarylensulfide, hergestellt aus
A) 50 - 100 Gew.-% Dihalogenaromaten der Formel (I)

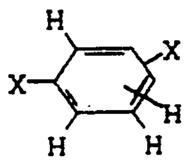

(I),

und
B) 0 bis 50 Gew.-%, bezogen auf die Summe von A) und B), Dihalogenaromaten der Formel (II)

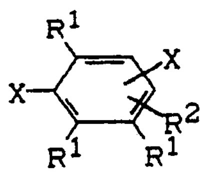

(II),

in denen
X für zueinander meta- und para-ständiges Halogen steht und
$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthal tenden Ring verknüpft sein können und immer ein Rest $R^1$ verschieden von Wasserstoff ist
und gegebenenfalls
C) von 0,01 bis 5 Mol-%, bezogen auf die Summe der Dihalogenaromaten (A + B), Tri- und Tetrahalogenaromaten der Formel (IX)
$Ar''Xp$ (IX),
in welcher
$Ar''$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
X für Halogen wie Chlor oder Brom steht und
p für die Zahl 3 oder 4 steht,
und
D) Polyetheretherketonblöcken der Formel (III)

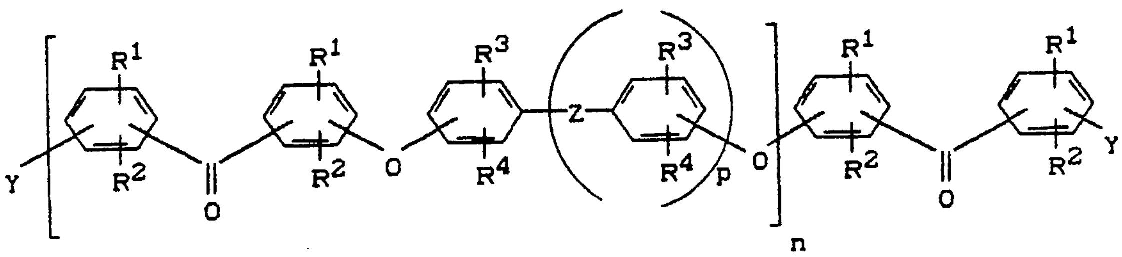

(III),

in der
Y für Halogen wie F, Cl, Br steht,
$R^1$, $R^2$, $R^3$ und $R^4$ unabhängig voneinander die bei Formel (II) für $R^1$, $R^2$ genannte Bedeutung haben und
Z eine chemische Einfachbindung, gegebenenfalls verzweigtes $C_{1-12}$-Alkyliden, gegebenenfalls verzweigtes $C_{5-20}$-Cycloalkyliden, Sauerstoff, Schwefel, SO, $SO_2$, CO bedeutet, wobei $R^1$ die bei Formel (II) angegebene Bedeutung hat,
p für die Zahl 1 oder 0 steht und
n für eine Zahl von 1 bis 100 steht.

2) Blockcopolyarylensulfide nach Anspruch 1, dadurch gekennzeichnet, daß in Formel (III) Z für gegebenenfalls verzweigtes $C_{1-6}$-Alkyliden, gegebenenfalls verzweigtes $C_{5-20}$-Cycloalkyliden, wie z.B. ein Rest der Formel (IIIa), -S-, $-SO_2-$

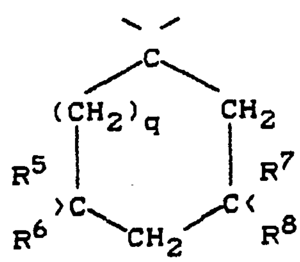

(IIIa),

in welcher
$R^5$, $R^6$, $R^7$, $R^8$ unabhängig voneinander Wasserstoff und $C_1$-$C_4$-Alkyl bedeuten und
q die Zahl 0, 1, 2 oder 3 bedeutet,
steht.

3) Verfahren zur Herstellung der erfindungsgemäßen Polyarylensulfidblockcopolymeren gemäß Anspruch 1, dadurch gekennzeichnet, daß

A) 50 - 100 Gew.-% Dihalogenaromaten der Formel (I)

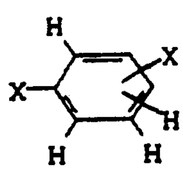

(I),

und

B) 0 bis 50 Gew.-%, bezogen auf die Summe von A) und B), Dihalogenaromaten der Formel (II)

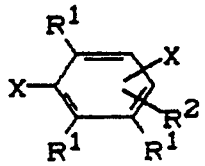

(II),

in denen

X für zueinander meta- und para-ständiges Halogen wie Chlor oder Brom steht und

$R^1$ und $R^2$ gleich oder verschieden ist und Wasserstoff $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und gegebenenfalls

C) von 0,01 bis 5 Mol-%, bezogen auf die Summe der Dihalogenaromaten (A + B), Tri- und Tetrahalogenaromaten der Formel (IX)

$Ar''Xp$ (IX),

in welcher

$Ar''$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

p für die Zahl 3 oder 4 steht,

und

mit 0,5 bis 1,25 Mol Schwefelspendern wie Alkalisulfid, bevorzugt Natrium-oder Kaliumsulfid oder deren Mischung, zusammen mit 0 bis 10 Gew.%. Alkalihydroxiden wie Natrium- und Kaliumhydroxid und 0 bis 0,5 Mol Alkalihydrogensulfid, oder deren Mischung, wobei das molare Verhältnis von Mol Dihalogenaromat/Mol Alkalisulfid im Bereich von 0,75:1 bis 1,25:1 liegen kann und 0 bis 0,05 Mol, bezogen auf die Summe der Dihalogenaromaten, Tri-Di- und Tetrahalogenaromaten der Formel (IV)

$ArX_n$ (IV),

in welcher

Ar ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht,

und

D) Polyetheretherketonblöcke der Formel (III)

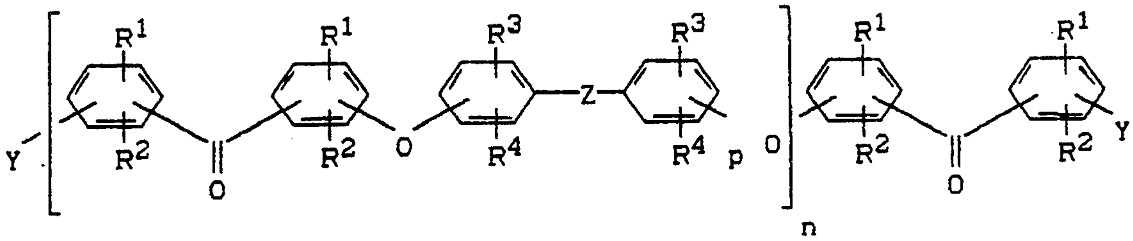

(III),

in welcher

Y für Halogen wie F, Cl, Br steht,

$R^1$, $R^2$, $R^3$ und $R^4$ unabhängig voneinander die bei Formel (II) für $R^1$, $R^2$ genannte Bedeutung haben und

Z eine chemische Einfachbindung, gegebenenfalls zweigtes $C_{1-12}$-Alkyliden, gegebenenfalls verzweigtes $C_{5-20}$-Cycloalkyliden, Sauerstoff, Schwefel, SO, $SO_2$, CO bedeutet, wobei $R^1$ die bei Formel (II) angegebene Bedeutung hat,

p für die Zahl 1 oder 0 steht und

n für eine Zahl von 1 bis 100 steht,

gegebenenfalls in Gegenwart von Kettenreglern umgesetzt werden.

4) Verwendung von Blockcopolyarylensulfiden nach Anspruch 1, zur Herstellung geformter Körper.